# EUROPEAN PATENT APPLICATION

(11) **EP 4 769 691 A1**
(43) Date of publication of application: **01.07.2026**
(21) Application number: 24767982.2
(22) Date of filing: 08.03.2024
(51) Int. Cl.: H01M 50/14, H01M 50/169, H01M 50/186

(54) **SECONDARY BATTERY**

(30) Priority: 23.08.2023 KR 20230110492
(71) Applicant: Samsung SDI Co., Ltd., Yongin-si, Gyeonggi-do 17084 (KR)
(72) Inventor: KIM, Bo Hoon, Yongin-si Gyeonggi-do 17084 (KR)
(74) Representative: Gulde & Partner
(86) International application number: PCT/KR2024/003061
(87) International publication number: WO 2025/041949

(57) **Abstract**

Disclosed is a secondary battery that prevents heat of a battery cell from being transferred to the surroundings thereof if an event occurs in the battery cell, wherein the secondary battery includes an electrode assembly including a first electrode plate and a second electrode plate, each of the first electrode plate and the second electrode plate having an electrode uncoated portion protruding from at least one side thereof, a case configured to receive the electrode assembly, the case having an opening formed in a lower end thereof, a cap assembly formed an one surface of the case, the cap assembly being configured to seal the case, the cap assembly including an electrode terminal electrically connected to the electrode uncoated portion, and a sealing plate coupled along the perimeter of the opening formed in the lower end of the case.

## Description

### [Technical Field]

Embodiments relate to a secondary battery.

### [Background Art]

A secondary battery is a battery that can be charged and discharged, unlike a primary battery, which cannot be charged. A low-capacity battery having a single battery cell packaged in the form of a pack is used in small portable electronic devices such as a cell phone and a camcorder, and a large-capacity battery including dozens of battery packs connected to each other is widely used as a power source for driving a motor of a hybrid electric vehicle.

The secondary battery is manufactured in a variety of shapes, including a cylindrical shape and a prismatic shape. The secondary battery is manufactured by receiving an electrode assembly including a positive electrode plate, a negative electrode plate, a separator, which is an insulator, interposed between the positive electrode plate and the negative electrode plate and an electrolyte in a case and coupling a cap plate to the case. The electrode assembly is electrically connected to an electrode terminal via a current collection unit. The internal volume of the case varies depending on the structure of the current collection unit. It is desirable to provide a secondary battery having a larger capacity within a given size.

### [Disclosure]

### [Technical Problem]

Embodiments provide a secondary battery that prevents heat of a battery cell from being transferred to the surroundings thereof if an event occurs in the battery cell.

### [Technical Solution]

A secondary battery according to an embodiment includes an electrode assembly including a first electrode plate and a second electrode plate, each of the first electrode plate and the second electrode plate having an electrode uncoated portion protruding from at least one side thereof, a case configured to receive the electrode assembly, the case having an opening formed in a lower end thereof, a cap assembly formed at one surface of the case, the cap assembly being configured to seal the case, the cap assembly including an electrode terminal electrically connected to the electrode uncoated portion, and a sealing plate coupled along the perimeter of the opening formed in the lower end of the case.

The sealing plate may be coupled along the perimeter of the opening by welding.

The sealing plate may be welded along the perimeter of the opening with a welding depth of 300 to 400 [um].

A breaking pressure of the sealing plate may be set to 7 to 10 [bar] through sealing with respect to the case.

The case may have a larger area than the electrode assembly, may be provided at the lower end thereof with the opening, and may be sealed by the sealing plate.

If the internal pressure of the case reaches a predetermined fracture pressure, at least three sides of the sealing plate may be fractured from the opening of the case.

If the sealing plate is fractured from the case, the electrode assembly may be separated from the cap assembly and may fall out of the case.

If the sealing plate is fractured from the case, the electrode assembly may be separated from the cap assembly at the part where the electrode assembly and the cap assembly are welded to each other.

The case may be provided at each of an upper part and a lower part thereof with an opening, the cap assembly may be coupled to the upper opening, and the sealing plate may be coupled to the lower opening.

The cap assembly may include a cap plate configured to seal the upper opening of the case and an electrode terminal extending through the cap plate so as to be electrically connected to the electrode assembly, and the sealing plate may be coupled to the cap plate at the position corresponding to the cap plate.

The cap plate may be provided with no vent.

The case may be provided at each of opposite sides and a lower part thereof with an opening, the cap assembly may be coupled to each of the side openings, and the sealing plate may be coupled to the lower opening.

The cap assembly may include a pair of cap plates configured to seal the side openings of the case and an electrode terminal extending through each of the cap plate so as to be electrically connected to the electrode assembly, and the sealing plate may be coupled between the pair of cap plates so as to correspond thereto.

The electrode assembly may be located between the pair of the cap plates, and the sealing plate may be located so as to correspond to a lower part of the electrode assembly.

Both ends of the electrode assembly may be coupled to the pair of the cap plates, respectively.

### [Advantageous Effects]

In a secondary battery according to an embodiment, a sealing plate may be fractured from a case if the internal pressure of a battery cell where an event occurred reaches a predetermined fracture pressure, whereby an electrode assembly may be ejected under the case, and therefore it is possible to quickly separate the electrode assembly from the surrounding battery cells to prevent heat propagation.

### [Description of Drawings]

FIG. 1 is a perspective view showing a secondary battery according to an embodiment;
FIG. 2 is a rear perspective view showing the secondary battery according to the embodiment;
FIG. 3A is a sectional view taken along line A-A' of FIG. 1;
FIG. 3B is an enlarged view of part P of FIG. 3A;
FIG. 4 is an exploded perspective view showing the coupling relationship between an electrode assembly and a current collector;
FIG. 5 shows temperature change over time if an event occurs in the secondary battery according to the embodiment;
FIG. 6 is a perspective view showing a secondary battery according to another embodiment;
FIG. 7A is a sectional view taken along line B-B' of FIG. 6;
FIG. 7B is an enlarged view of part P of FIG. 7A;
FIG. 8 is a partial sectional view showing the coupling relationship between an electrode assembly and an electrode terminal in the secondary battery according to the other embodiment; and
FIG. 9 is a partial perspective view showing the coupling relationship between the electrode assembly and an insulating plate in the secondary battery according to the other embodiment.

### [Mode for Invention]

Hereinafter, preferred embodiments will be described in detail with reference to the accompanying drawings.

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" includes any one of the enumerated items and any combination of one or more thereof.

Spatially related terms such as "beneath," "below," "lower," "above," and "upper" may be used herein for ease of description to describe one element's or feature's relationship to another element(s) or feature(s) as illustrated in the drawings. These spatial terms are intended to facilitate understanding of the disclosure according to various manufacturing processes or states of use of a secondary battery and are not intended to limit the disclosure. For example, if a secondary battery in the drawings is inverted, an element described as "lower" or "below" becomes "upper" or "above." Thus, "below" includes "above" or "below".

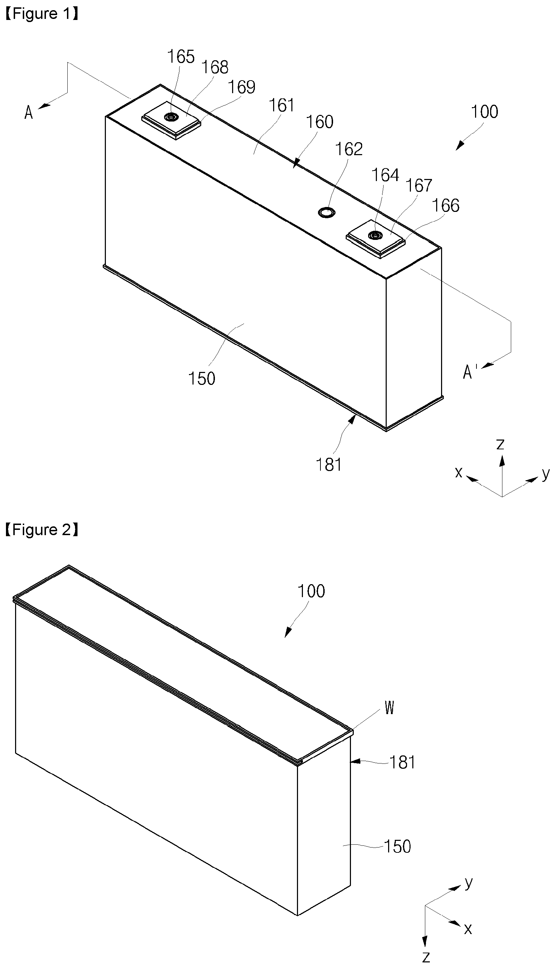

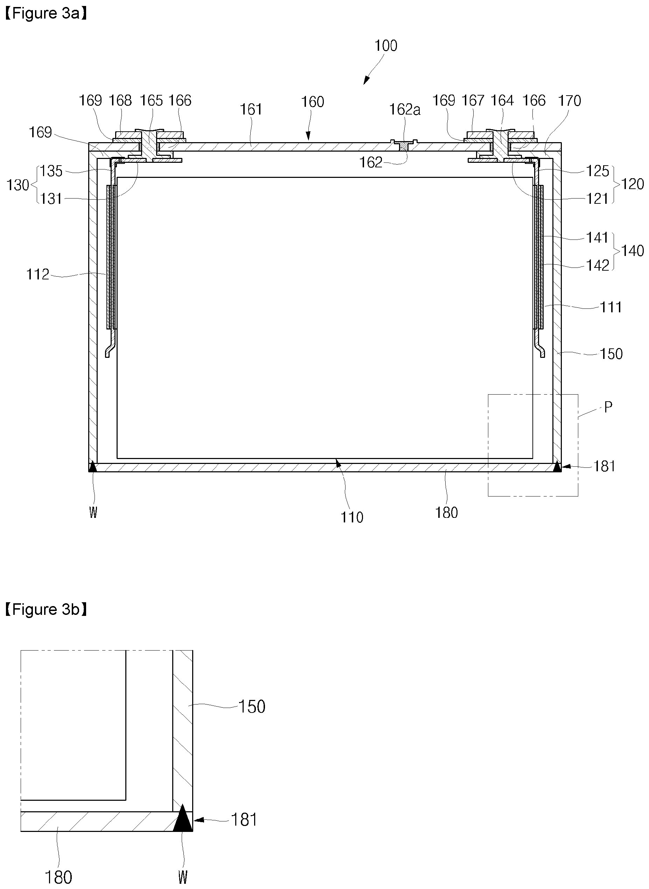

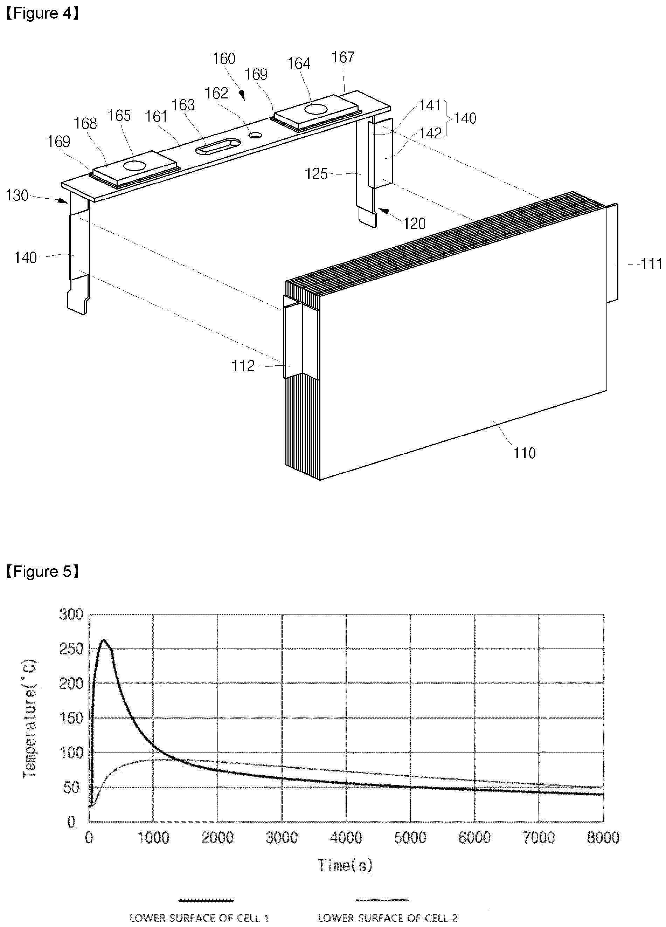

FIG. 1 is a perspective view showing a secondary battery according to an embodiment. FIG. 2 is a rear perspective view showing the secondary battery according to the embodiment. FIG. 3A is a sectional view taken along line A-A' of FIG. 1. FIG. 3B is an enlarged view of part P of FIG. 3A. FIG. 4 is an exploded perspective view showing the coupling relationship between an electrode assembly and a current collector. FIG. 5 shows temperature change over time if an event occurs in the secondary battery according to the embodiment.

Referring to FIGs. 1 to 3, the secondary battery 100 according to the embodiment may include an electrode assembly 110, a current collection unit 120 and 130, an auxiliary tab 140, a case 150, a cap assembly 160, and a sealing plate 180.

The electrode assembly 110 may be formed by stacking a plurality of laminates, each including a first electrode plate, a separator, and a second electrode plate, each of which may be formed as a thin plate or a membrane. The first electrode plate may operate as a positive electrode, and the second electrode plate may operate as a negative electrode. The first electrode plate and the second electrode plate may be disposed with different polarities with respect to each other by selection of those skilled in the art.

The first electrode plate may be formed by applying a first electrode active material, such as a transition metal oxide, to a first electrode current collector made of metal foil, such as aluminum, and may include a first electrode uncoated portion 111, which is a region to which no first electrode active material is applied. The first electrode uncoated portion 111 may provide a passage for current flow between the first electrode plate and the outside.

The first electrode uncoated portion 111 may be formed to overlap at the same position if the first electrode plate is stacked, thereby constituting a multi-tab structure. The first electrode uncoated portion 111 may be formed so as to protrude from one side of the electrode assembly 110, and a plurality of first electrode uncoated portions may be welded to each other to form a single first current collection tab. The first current collection tab 111 may be integrally formed with the first electrode plate and may be withdrawn from each of the stacked first electrode plates, thereby increasing efficiency of current collection from the electrode assembly 110. The first current collection tab 111 may be made of a member separate from the first electrode plate by selection of those skilled in the art.

The second electrode plate may be formed by applying a second electrode active material, such as graphite or carbon, to a second electrode current collector made of metal foil, such as copper or nickel, and may include a second electrode uncoated portion 112, which is a region to which no second electrode active material is applied.

The second electrode uncoated portion 112 may be formed to overlap at the same position if the second electrode plate is stacked, thereby constituting a multi-tab structure. The second electrode uncoated portion 112 may be formed so as to protrude from the other side of the electrode assembly 110, and a plurality of second electrode uncoated portions may be welded to each other to form a single second current collection tab.

The separator may be located between the first and second electrode plates to prevent short circuit and to allow movement of lithium ions. The separator may be made of polyethylene, polypropylene, or a composite film of polyethylene and polypropylene. The material of the separator may not limit the scope of the disclosure.

The electrode assembly 110 may be received in the case 150 with an electrolyte. The electrolyte may include an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF6 or LiBF4. The electrolyte may be liquid, solid, or gel.

The current collection unit 120 and 130 may include a first current collection unit 120 electrically connected to the first electrode plate and a second current collection unit 130 electrically connected to the second electrode plate.

The first current collection unit 120 may be made of a conductive material, such as aluminum, and may be electrically connected to the first electrode plate by contacting the first electrode uncoated portion 111 protruding from one end of the electrode assembly 110. The first current collection unit 120 may include a first terminal connection portion 121 and a first electrode connection portion 125. A bent region may be formed between the first terminal connection portion 121 and the first electrode connection portion 125.

The first terminal connection portion 121 may be located above the electrode assembly 110, and may formed parallel to a cap plate 161, a description of which will follow. The first terminal connection portion 121 may be located between the electrode assembly 110 and the cap plate 161, and may be formed in the shape of a roughly flat plate. A first terminal 164, a description of which will follow, may be coupled to the first terminal connection portion 121. The first electrode connection portion 125 may be bent at an end of the first terminal connection portion 121 and may extend downward. The first electrode connection portion 125 may be formed at one side of the electrode assembly 110. The first electrode connection portion 125 may be coupled to the first electrode uncoated portion 111 either directly or via the auxiliary tab 140, which is optionally coupled to the first electrode connection portion 125.

The second current collection unit 130 may be made of a conductive material, such as nickel, and may be electrically connected to the second electrode plate by contacting the second electrode uncoated portion 112 protruding from the other end of the electrode assembly 110. The second current collection unit 130 may include a second terminal connection portion 131 and a second electrode connection portion 135. A bent region may be formed between the second terminal connection portion 131 and the second electrode connection portion 135. A second terminal 165 may be electrically connected to the second terminal connection portion 131, and the auxiliary tab 140 may be optionally coupled to the second electrode connection portion 135. The second terminal connection portion 131 may be coupled to the second electrode uncoated portion 112 either directly or via the auxiliary tab 140. The second current collection unit 130 is identical in shape to the first current collection unit 120, and therefore a duplicate description thereof will be omitted.

The auxiliary tab 140 may be electrically coupled to each of the first electrode connection portion 125 and the second electrode connection portion 135. The auxiliary tabs 140 coupled to the first and second electrode connection portions 125 and 135 may have the same shape and may be made of different materials. For example, the auxiliary tab 140 coupled to the first electrode connection portion 125 may be made of aluminum or an aluminum alloy, and the auxiliary tab 140 coupled to the second electrode connection portion 135 may be made of copper or a copper alloy. Because other configurations of the auxiliary tabs 140 are the same, the auxiliary tab 140 coupled to the first electrode connection portion 125 will hereinafter be described by way of example.

One end of the auxiliary tab 140 may be fixed to the first electrode connection portion 125 by welding. The auxiliary tab 140 and the first electrode connection portion 125 may be welded to each other using laser welding, resistance welding, ultrasonic welding, or the like. The other end of the auxiliary tab 140 may have an L-shape bent from the first electrode connection portion 125. The first electrode uncoated portion 111 of the electrode assembly 110 may be welded to the other end of the auxiliary tab 140. With the first electrode uncoated portion 111 welded, the auxiliary tab 140 may be bent once again such that the first electrode uncoated portion 111 faces the case 150 outside the second electrode connection portion 135. The auxiliary tab 140 and the first electrode uncoated portion 111 may be located between the electrode assembly 110 and the case 150 in that order from the electrode assembly 110.

The auxiliary tab 140 may be integrally formed with the first electrode connection portion 125 and the second electrode connection portion 135. No auxiliary tab 140 may optionally be provided, and the first electrode uncoated portion 111 and the second electrode uncoated portion 112 may be directly welded to the first electrode connection portion 125 and the second electrode connection portion 135, respectively.

The case 150 may be made of a conductive metal, such as aluminum, an aluminum alloy, or nickel-plated steel. The case 150 may have an upper opening configured to allow the electrode assembly 110 to be inserted and seated therethrough and a lower opening corresponding thereto, thereby having an overall hexahedral shape with no top and no bottom. The cap plate 161 may be coupled to the upper opening of the case 150 to seal the case 150. An inner surface of the case 150 may be basically insulated to prevent the occurrence of electrical short circuit therein. In other embodiments, one electrode of the electrode assembly 110 may be electrically connected to the case 150 via the cap plate 161. The inner surface of the case 150 may be insulated to prevent the occurrence of electrical short circuit therein. For example, the case 150 may operate as a positive electrode.

The cap assembly 160 may be coupled to the upper opening of the case 150. The cap assembly 160 may include a cap plate 161, an electrolyte inlet 162, a first terminal 164, a second terminal 165, a gasket 166, a first terminal plate 167, a second terminal plate 168, a fastening plate 169, and a lower insulating member 170.

The cap plate 161 may seal the upper opening of the case 150, and may be made of the same material as the case 150. For example, the cap plate 161 may be coupled to the case 150 by laser welding. The cap plate 161 may be electrically independent or electrically connected to one of the first current collection unit 120 and the second current collection unit 130.

The electrolyte inlet 162 for injecting an electrolyte may be formed in the cap plate 161. An electrolyte may be injected into the case 150 through the electrolyte inlet 162, after which the electrolyte inlet 162 may be sealed by a stopper 162a.

Each of the first terminal 164 and the second terminal 165 may be formed so as to extend through the cap plate 161. The first terminal 164 may be coupled to the first terminal connection portion 121 and may be electrically connected to the first current collection unit 120. The second terminal 165 may be coupled to the second terminal connection portion 131 and may be electrically connected to the second current collection unit 130.

The gasket 166 may be formed between the first and second terminals 164 and 165 and the cap plate 161. The gasket 166 may be formed so as to wrap the outer side of each of the first and second terminals 164 and 165 and may be made of an insulating material. The gasket 166 may seal between the first and second terminals 164 and 165 and the cap plate. The gasket 166 may prevent external moisture from permeating the secondary battery 100 or may prevent the electrolyte received in the secondary battery 100 from leaking out.

The first terminal plate 167 may be coupled to the first terminal 164 protruding above the cap plate 161. After the first terminal plate 167 is coupled to the first terminal 164, the first terminal plate 167 may be fixed to the first terminal 164 by riveting an upper part of the first terminal 164 or by welding the interface between the first terminal plate 167 and the first terminal 164.

The second terminal plate 168 may be coupled to the second terminal 165 protruding above the cap plate 161. After the second terminal plate 168 is coupled to the second terminal 165, the second terminal plate 168 may be fixed to the second terminal 165 by riveting an upper part of the second terminal 165 or by welding the interface between the second terminal plate 168 and the second terminal 165.

The fastening plates 169 may be formed between the cap plate 161 and the first terminal plate 167 and between the cap plate 161 and the second terminal plate 168. Each of the fastening plates 169 may be made of an insulating material, or only one of the fastening plates may be made of an electrically conductive material. For example, the fastening plate 169 located under the first terminal plate 167 may be made of a conductive material, and the fastening plate 169 located under the second terminal plate 168 may be made of an insulating material. The first terminal 164 may have the same polarity as the cap plate 161. If each of the fastening plates 169 is made of an insulating material, the first terminal 164 and the second terminal 165 may be electrically isolated from the cap plate 161.

The lower insulating member 170 may be formed between the first current collection unit 120 and the cap plate 161 and between the second current collection unit 130 and the cap plate 161 to electrically insulate the first and second current collection units 120 and 130 from the cap plate 161.

The sealing plate 180 may be configured to seal the lower opening of the case 150. The sealing plate 180 may be rectangular in shape so as to correspond to the lower opening of the case 150, and may be coupled along the opening of the case 150 by welding W. For ease of welding and increase in coupling force, the sealing plate 180 may be made of the same material as the case 150.

The sealing plate 180 may be coupled to the case 150 by welding W at the position where an edge region 181 of the sealing plate 180 is connected to the case 150 along the lower opening of the case 150. Welding strength may be determined depending on the depth of welding W. The depth of welding W at the edge region 181 of the sealing plate 180 may be set to 300 to 400 [um]. At this depth, coupling between the sealing plate 180 and the case 150 may be maintained until the pressure reaches a predetermined pressure, and the sealing plate 180 and the case 150 may be separated from each other if the pressure exceeds the predetermined pressure. If the depth is set to 300 to 400 [um] in order to weld the sealing plate 180, the breaking pressure of the sealing plate 180 may be set to 7 to 10 [bar]. If the breaking pressure is 7 [bar] or more, the pressure resistance of the case 150 and the sealing plate 180 may be guaranteed to maintain stability of the operation under normal conditions. If the breaking pressure is set to 10 [bar] or less, the sealing plate 180 may be opened at the same level as the operation of an existing vent if an event occurs in a battery cell.

In the secondary battery 100 according to the embodiment, the sealing plate 180 may be fractured from a lower end of the case 150 if an event occurs, instead of providing a separate vent in the cap plate 160. If the internal pressure of the case 150 reaches a set fracture pressure, at least three of four sides of the sealing plate 180 coupled to the case 150 may be simultaneously fractured by the internal pressure. The sealing plate 180 may open the lower end of the case 150, and the electrode assembly 110 in the case 150 may be exposed downward. If the lower part of the case 150 is opened while the case 150 is under pressure, the electrode assembly 110 may be pushed in the open direction. The electrode assembly 110 may be coupled to the auxiliary tab 140 (or to the current collectors 120 and 130 if the auxiliary tab 140 is not separately provided) via the first electrode uncoated portion 111 and the second electrode uncoated portion 112, each of which may be formed in the shape of relatively thin foil. The part of the electrode assembly 110 where the first electrode uncoated portion 111 and the second electrode uncoated portion 112 are welded to the auxiliary tab 140 may be fractured, whereby the electrode assembly 110 may be separated from the auxiliary tab 140 and may be discharged out of the case 150 through the open lower part of the case 150. The electrode assembly 110 that has ignited in the battery cell where the event occurred may be ejected to the outside of the case 150 and, although not shown separately, may be received in an external cooling/extinguishing solvent or the like. The electrode assembly 110 may be separated and ejected from the battery cell where the event occurred, thereby preventing heat from propagating to neighboring battery cells.

In the secondary battery 100 according to the embodiment, as described above, the sealing plate 180 may be fractured from the case 150 if the internal pressure of the battery cell where the event occurred reaches a predetermined fracture pressure, whereby the electrode assembly 110 may be ejected under the case 150 and may be quickly separated from the surrounding battery cells to prevent heat propagation.

Hereinafter, the operation of the secondary battery according to the embodiment will be described in more detail.

FIG. 5 shows temperature change over time if an event occurs in the secondary battery according to the embodiment.

Referring to FIG. 5, the temperature of a lower surface of cell 1, where an event occurred, may be compared to the temperature of a lower surface of cell 2 adjacent thereto. If the event occurs in cell 1, the temperature may rapidly rise to about 270 degrees. As previously described, the electrode assembly 110 of cell 1 may be ejected through the lower part of the case 150, and the temperature of cell 1 may drop back down from 270 degrees.

The temperature of cell 2 may initially rise to about 80 degrees in response to the event in cell 1, but the temperature of cell 2 may not rise any higher, and then the temperature of cell 2 may gradually decrease. The experiment shows that propagation of heat caused by the event in cell 1 to cell 2 adjacent thereto may be prevented.

Hereinafter, the configuration of a secondary battery according to another embodiment will be described.

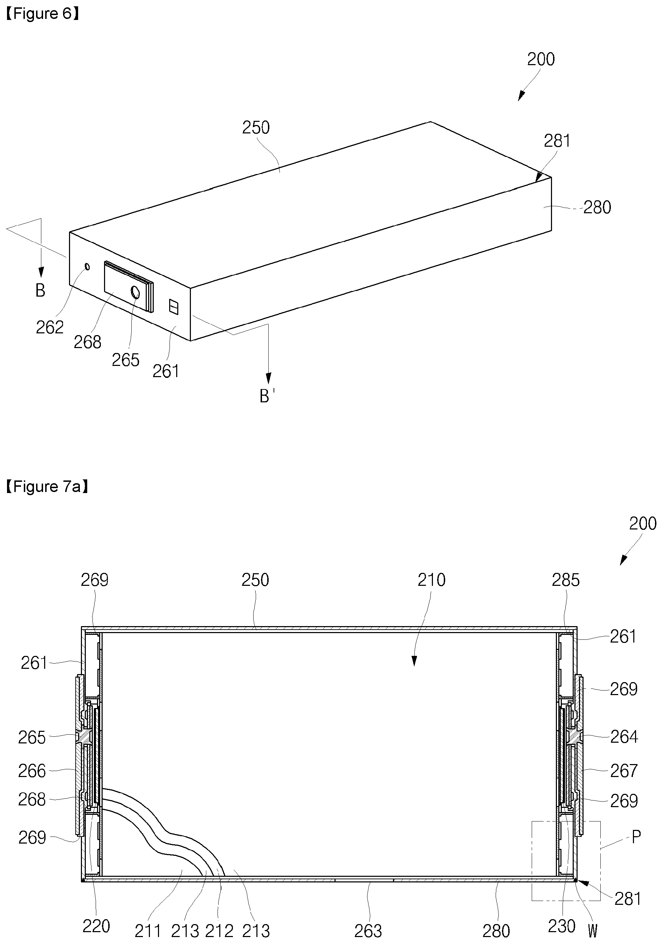

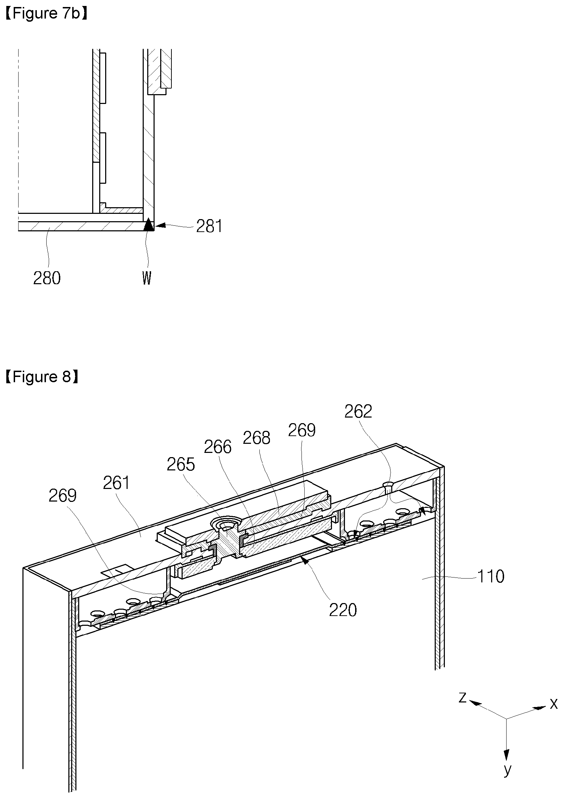

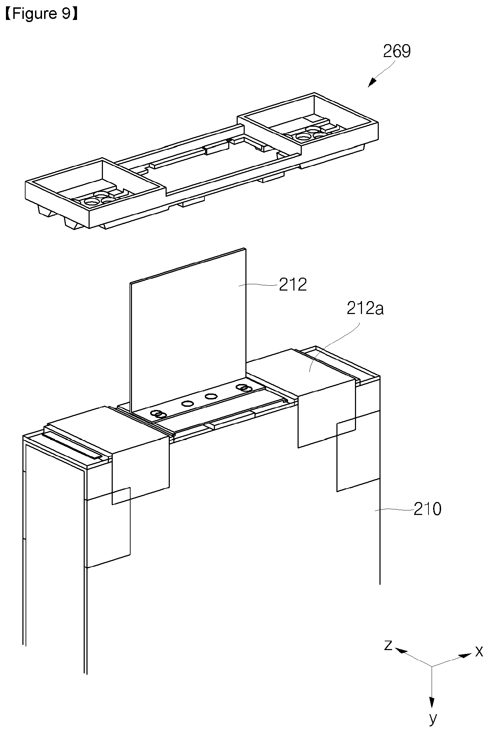

FIG. 6 is a perspective view showing a secondary battery according to another embodiment. FIG. 7A is a sectional view taken along line B-B' of FIG. 6. FIG. 7B is an enlarged view of part P of FIG. 7A. FIG. 8 is a partial sectional view showing the coupling relationship between an electrode assembly and an electrode terminal in the secondary battery according to the other embodiment. FIG. 9 is a partial perspective view showing the coupling relationship between the electrode assembly and an insulating plate in the secondary battery according to the other embodiment.

Referring to FIGs. 6 to 9, the secondary battery 200 according to the other embodiment may include an electrode assembly 210, a case 250, a cap assembly 260, and a sealing plate 280.

The electrode assembly 210 may be formed by winding or stacking a laminate including a first electrode plate, a separator, and a second electrode plate, each of which may be formed as a thin plate or a membrane. In the previous embodiment, the first electrode uncoated portion 111 and the second electrode uncoated portion 112 may be formed at the upper part of the electrode assembly 110. In the secondary battery 200 according to the other embodiments, a first electrode uncoated portion 211 and a second electrode uncoated portion 212 of the electrode assembly 210 may be formed at opposites side of the electrode assembly 210, respectively. A fixing tape 212a may be further formed at a stacked edge of the electrode assembly 210 as needed. This embodiment may be identical in construction to the previous embodiment except for orientations of the electrode uncoated portions 211 and 212.

The case 250 may be made of a conductive metal, such as aluminum, an aluminum alloy, or nickel-plated steel, and may be open at opposite sides and the bottom thereof. The cap assembly 260 may be coupled to opposite sides of the case 250 to form positive and negative terminals.

The cap assembly 260 may be coupled to openings formed in the opposite sides of the case 250. The cap assembly 260 may be electrically coupled to the first electrode uncoated portion 211 and the second electrode uncoated portion 212 of the electrode assembly 210. The cap assembly 260 may include a cap plate 261, an electrolyte inlet 262, a first terminal 264, a second terminal 265, a gasket 266, a first terminal plate 267, a second terminal plate 268, a fastening plate 269, and a lower insulating member 270.

The cap plate 261 may seal the opening formed at each of the opposite ends of the case 250, and may be made of the same material as the case 250. An electrolyte inlet 262 for injecting an electrolyte may be formed in the cap plate 261.

Each of the first terminal 264 and the second terminal 265 may be formed so as to extend through the cap plate 261. The first terminal 264 may be electrically connected to the first electrode uncoated portion 211. The second terminal 265 may be electrically connected to the second electrode uncoated portion 212.

The gasket 266 may be formed between each of the first and second terminals 264 and 265 and the cap plate 261.

The first terminal plate 267 may be coupled to the first terminal 264 protruding above the cap plate 261. The second terminal plate 268 may be coupled to the second terminal 265 protruding above the cap plate 261.

The fastening plates 269 may be formed between the cap plate 261 and the first terminal plate 267 and between the cap plate 261 and the second terminal plate 268. Each of the fastening plates 269 may be made of an insulating material, or only one of the fastening plates may be made of an electrically conductive material.

The lower insulating member 270 may be formed between a first current collection unit 220 and the cap plate cap plate 261 and between a second current collection unit 230 and the cap plate 261 to electrically insulate the first and second current collection units 220 and 230 from the cap plate 261.

The sealing plate 280 may be coupled to an opening located at a lower part of the case 250. The sealing plate 280 may be rectangular in shape so as to correspond to the lower opening of the case 250 and may be coupled along the opening of the case 250 by welding. If the sealing plate 280 is coupled to the case 250 by welding W at the position where the sealing plate 280 is connected to the case 250 along the lower opening of the case 250, welding strength may be determined depending on the depth of welding W. In the secondary battery 200 according to the other embodiment, the depth of welding W at the sealing plate 280 may be set to 300 to 400 [um]. If the depth is set to 300 to 400 [um] in order to weld the sealing plate 280, the breaking pressure of the sealing plate 280 may be set to 7 to 10 [bar]. If the breaking pressure is 7 [bar] or more, the pressure resistance of the case 250 and the sealing plate 280 may be guaranteed to maintain stability of the operation under normal conditions. If the breaking pressure is set to 10 [bar] or less, the sealing plate 280 may be opened at the same level as the operation of an existing vent if an event occurs in a battery cell.

Because the first electrode uncoated portion 211 and the second electrode uncoated portion 212 of the electrode assembly 210, each of which may be formed in the shape of thin foil, are welded to the respective terminals 264 and 265, the first electrode uncoated portion 211 and the second electrode uncoated portion 212 may be separated and ejected under the case 150 upon opening of the sealing plate 280.

In the secondary battery 200 according to the other embodiment, as described above, the sealing plate 280 may be fractured from the case 250 if the internal pressure of the battery cell where the event occurred reaches a predetermined fracture pressure, whereby the electrode assembly 210 may be ejected under the case 250 and may be quickly separated from the surrounding battery cells to prevent heat propagation.

The above is only one embodiment for implementing a secondary battery according to the disclosure, the disclosure is not limited to the above embodiment, and there is a technical spirit of the disclosure to the extent that various modifications can be made by anyone having ordinary skill in the art to which the disclosure pertains without departing from the gist of the disclosure as claimed in the following claims.

## Claims

1. A secondary battery comprising:
an electrode assembly comprising a first electrode plate and a second electrode plate, each of the first electrode plate and the second electrode plate having an electrode uncoated portion protruding from at least one side thereof;
a case configured to receive the electrode assembly, the case having an opening formed in a lower end thereof;
a cap assembly formed at one surface of the case, the cap assembly being configured to seal the case, the cap assembly comprising an electrode terminal electrically connected to the electrode uncoated portion; and
a sealing plate coupled along a perimeter of the opening formed in the lower end of the case.

2. The secondary battery as claimed in claim 1, wherein the sealing plate is coupled along the perimeter of the opening by welding.

3. The secondary battery as claimed in claim 1, wherein the sealing plate is welded along the perimeter of the opening with a welding depth of 300 to 400 [um].

4. The secondary battery as claimed in claim 1, wherein a breaking pressure of the sealing plate is set to 7 to 10 [bar] through sealing with respect to the case.

5. The secondary battery as claimed in claim 1, wherein the case has a larger area than the electrode assembly, is provided at the lower end thereof with the opening, and is sealed by the sealing plate.

6. The secondary battery as claimed in claim 1, wherein, if an internal pressure of the case reaches a predetermined fracture pressure, at least three sides of the sealing plate are fractured from the opening of the case.

7. The secondary battery as claimed in claim 6, wherein, if the sealing plate is fractured from the case, the electrode assembly is separated from the cap assembly and falls out of the case.

8. The secondary battery as claimed in claim 6, wherein, if the sealing plate is fractured from the case, the electrode assembly is separated from the cap assembly at a part where the electrode assembly and the cap assembly are welded to each other.

9. The secondary battery as claimed in claim 1, wherein the case is provided at each of an upper part and a lower part thereof with an opening,
the cap assembly is coupled to the upper opening, and
the sealing plate is coupled to the lower opening.

10. The secondary battery as claimed in claim 9, wherein the cap assembly comprises a cap plate configured to seal the upper opening of the case and an electrode terminal extending through the cap plate so as to be electrically connected to the electrode assembly, and
the sealing plate is coupled to the cap plate at a position corresponding to the cap plate.

11. The secondary battery as claimed in claim 10, wherein the cap plate is provided with no vent.

12. The secondary battery as claimed in claim 1, wherein the case is provided at each of opposite sides and a lower part thereof with an opening,
the cap assembly is coupled to each of the side openings, and
the sealing plate is coupled to the lower opening.

13. The secondary battery as claimed in claim 12, wherein the cap assembly comprises a pair of cap plates configured to seal the side openings of the case and an electrode terminal extending through each of the cap plate so as to be electrically connected to the electrode assembly, and the sealing plate is coupled between the pair of cap plates so as to correspond thereto.

14. The secondary battery as claimed in claim 13, wherein the electrode assembly is located between the pair of the cap plates, and the sealing plate is located so as to correspond to a lower part of the electrode assembly.

15. The secondary battery as claimed in claim 14, wherein both ends of the electrode assembly are coupled to the pair of the cap plates, respectively.
